(19) Europäisches Patentamt
European Patent Office
Office européen des brevets

(11) **EP 2 394 851 A2**

(12) **EUROPEAN PATENT APPLICATION**

(43) Date of publication:
**14.12.2011 Bulletin 2011/50**

(51) Int Cl.:
**B60Q 1/14** *(2006.01)*

(21) Application number: **11168010.4**

(22) Date of filing: **30.05.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **10.06.2010 JP 2010133243**

(71) Applicant: **Koito Manufacturing Co., Ltd. Tokyo 108-8711 (JP)**

(72) Inventors:
• **Yamazaki, Masashi**
 **Shizuoka-shi, Shizuoka (JP)**
• **Toda, Atsushi**
 **Shizuoka-shi, Shizuoka (JP)**

(74) Representative: **Grünecker, Kinkeldey, Stockmair & Schwanhäusser Leopoldstrasse 4 80802 München (DE)**

(54) **Vehicle lighting system**

(57) A vehicle lighting system (100) is provided with a vehicle lamp (10) capable of switching a light distribution pattern between a low-beam pattern and a high-beam pattern and a control section (302) for performing a switching control of the light distribution pattern on a basis of information indicative of a situation ahead of an own vehicle (110). The control section (302) is configured to perform the switching control according to a positional information on a forward vehicle (112) in a case where the information indicates a presence of the forward vehicle. The control section (302) is configured to give priority to switching the light distribution pattern to the low-beam pattern irrespective of presence or absence of the forward vehicle in a case where the information indicates a curved road condition sharper than a reference curved road.

*FIG.8*

**EP 2 394 851 A2**

Description

## BACKGROUND OF THE INVENTION

<FIELD OF THE INVENTION>

The present invention relates to a vehicle lighting system, a control apparatus, a control method and a vehicle lamp which control a light distribution pattern during running on a sharply curved road.

<RELATED ART>

Conventionally, there is known a light distribution variable vehicle lighting apparatus which forms a low-beam pattern by blocking light from a light source using a shade, and forms a high-beam pattern when the light is not blocked by the shade. In addition, with an increase in performance of vehicles in recent years, there is proposed a vehicle lamp which forms a light distribution pattern having a shape different from that of a standard low beam or high beam in accordance with surrounding situations.

For example, a vehicle headlamp apparatus of Patent Document 1 forms a light distribution pattern in which a part of a high beam is not emitted by dividing a light distribution pattern for forming the high beam into a plurality of portions, allowing a part of the portions to be lit, and supplementally adding the light distribution pattern to a low-beam pattern. In addition, a vehicle headlamp apparatus of Patent Document 2 includes left and right side lighting devices each for a high beam, and forms a high-beam pattern as a whole by superimposing a left side light distribution pattern formed by the left side lighting device and a right side light distribution pattern formed by the right side lighting device on each other. In addition, each of the left side lighting device and the right side lighting device has a configuration in which light of a part of a high-beam illumination area can be blocked. With the configuration, the vehicle headlamp apparatus allows light only in an area where an oncoming vehicle or the like is detected to be blocked while forming a light distribution pattern similar to a high-beam pattern, whereby glare given to the oncoming vehicle can be suppressed. Similarly, Patent Document 3 discloses a vehicle headlamp apparatus which forms a light distribution pattern as a whole by superimposing a left side light distribution pattern formed by a left side lighting device and a right side light distribution pattern formed by a right side lighting device on each other.

Patent Document 1: EP2085264A2
Patent Document 2: JP-A-2009-227088
Patent Document 3: EP2135774A2

In each of the vehicle headlamp apparatuses in Patent Documents 1 to 3, when trying to detect whether or not a forward vehicle or the like glare to which should be taken into consideration is present ahead of an own vehicle, the position of presence of the forward vehicle or the like is located by using a signal from a detection apparatus such as a camera, a radar, or the like, and light in the area of the position is blocked. In such a detection apparatus, for example, a fan-shaped detection area is generally set with the front of the own vehicle as the center of the fan. When the own vehicle is running on a straight road or a gently curved road, the forward vehicle including an oncoming vehicle present in a long-distance area can be easily detected. However, when the own vehicle is running on a sharply curved road and passes by an oncoming vehicle, there is a case where the sharply curved road forms a blind spot so that the oncoming vehicle is detected as if the oncoming vehicle suddenly approaches from a lateral side of the detection area. In this case, the oncoming vehicle sometimes does not enter the detection area even when the oncoming vehicle is extremely close to the own vehicle depending on the degree of the curve so that there is a case where the oncoming vehicle can not be recognized, or the recognition is delayed as compared with the time of running on the straight road. When the switching of the light distribution pattern of the vehicle headlamp apparatus is controlled on the basis of the presence or absence of the oncoming vehicle or the like, the vehicle headlamp apparatus judges that the oncoming vehicle does not exist until the actual oncoming vehicle is detected. Accordingly, the vehicle headlamp apparatus may disadvantageously perform control of giving priority to securement of the view of a driver to turn on the high beam. As a result, there is a case where the glare is given to the oncoming vehicle which has actually approached the own vehicle.

## SUMMARY OF THE INVENTION

One or more embodiment of the invention provide a vehicle lighting system, and a control apparatus and a vehicle lamp thereof which are capable of automatically selecting a light distribution pattern which does not give glare to an oncoming vehicle or the like even during running on a sharply curved road.

In accordance with one or more embodiments of the invention, a vehicle lighting system 100 may include a vehicle lamp 10 capable of switching a light distribution pattern between a low-beam pattern and a high-beam pattern, and a control section 302 for performing a switching control of the light distribution pattern on a basis of information indicative of a situation ahead of an own vehicle 110. The control section 302 may perform the switching control according to a positional information on a forward vehicle 112 in a case where the information indicates a presence of the forward vehicle. The control section 302 may give priority to switching the light distribution pattern to the low-beam pattern irrespective of presence or absence of the forward vehicle in a case where the information indicates a curved road condition sharper than a reference curved road (that is, a radius-of-curvature of the curve is smaller than a threshold).

Other aspects and advantages of the invention will be apparent from the following description and the appended claims.

## DESCRIPTION OF THE DRAWINGS

FIG. 1 is a conceptual view of a configuration of a vehicle lighting system of an exemplary embodiment;

FIG. 2 is a schematic cross-sectional view explaining an internal structure of a lighting unit including a vehicle lamp in the vehicle lighting system of the exemplary embodiment;

FIG. 3 is a perspective view explaining a shape of a rotational shade which may be applied to the vehicle lamp of the exemplary embodiment;

FIG. 4 is an explanatory view explaining a phenomenon occurring when an own vehicle is running on a curved road, and a threshold of a sharp curve judgment in the vehicle lighting system of the exemplary embodiment;

FIG. 5 is a functional block diagram with a control section of the vehicle lighting system of the exemplary embodiment positioned in the center;

FIG. 6 is a flowchart of control of the vehicle lighting system of the exemplary embodiment;

FIG. 7 is a flowchart explaining a sharp curve judgment of S100 in the flowchart of FIG. 6 in detail;

FIG. 8 is an explanatory view explaining a case where a special low-beam pattern is selected in the vehicle lighting system of the exemplary embodiment;

FIG. 9 is an explanatory view explaining an example of an operation of a switching switch when control in the vehicle lighting system of the exemplary embodiment is manually performed;

FIG. 10 is a flowchart explaining a manual switching state of FIG. 9;

FIG. 11 is an example of a circuit configuration for implementing the manual switching of FIG. 9;

FIG. 12 is an explanatory view explaining an example of an operation of another switching switch when the control in the vehicle lighting system of the exemplary embodiment is manually performed; and

FIG. 13 is an example of a circuit configuration for implementing the manual switching of FIG. 12.

## DETAILED DESCRIPTION OF EMBODIMENTS

The description will be given hereinbelow of embodiments of the invention.

In accordance with the embodiments, a vehicle lighting system may include a vehicle lamp capable of switching a light distribution pattern between a low-beam pattern and a high-beam pattern, and a control section for performing a switching control of the light distribution pattern on a basis of information indicative of a situation ahead of an own vehicle. The control section may perform the switching control according to a positional information on a forward vehicle in a case where the information indicates a presence of the forward vehicle. The control section may give priority to switching the light distribution pattern to the low-beam pattern irrespective of presence or absence of the forward vehicle in a case where the information indicates a curved road condition sharper than a reference curved road.

The information indicative of the situation ahead of the own vehicle may include at least, e.g., information indicative of the presence of the forward vehicle (including a leading vehicle and an oncoming vehicle) and a pedestrian, and information indicative of a shape of a running road on which the own vehicle is running. As the information indicative of the presence of the forward vehicle and the pedestrian, there may be used information from an object detection apparatus such as, e.g., a vehicle-mounted camera, a millimeter wave radar, or the like. In addition, as the information indicative of the shape of the running road, there may be used information from, e.g., a steering angle sensor and a yaw rate sensor of the own vehicle and information from a car navigation system and an external road traffic information system in addition to the information from the vehicle-mounted camera and the millimeter wave radar. In the case where the acquired information indicates the presence of the forward vehicle, the control section may perform the switching control of the light distribution patterns according to the positional information on the forward vehicle. For example, when the oncoming vehicle is present, the control section switches the light distribution pattern to the low-beam pattern or to a special light distribution pattern in which light is blocked only in a portion where the oncoming vehicle is present so as not to give glare to the oncoming vehicle. In addition, for example, when no oncoming vehicle or the like is present, the control section switches the light distribution pattern to the high-beam pattern so as to improve view of a driver of the own vehicle. On the other hand, for example, in the case where the acquired information indicates the curved road condition sharper than that of the reference curved road, the control section gives priority to switching to the low-beam pattern irrespective of presence or absence of the forward vehicle. According to this aspect, even when the degree of a sharp curve is larger than a given value so that the presence of the actual oncoming vehicle or the like can not be recognized due to a mountain or an obstacle, the control section presumes a possibility of presence of the oncoming vehicle or the like on the basis of the shape of the road, and preferentially switches the light distribution pattern to the low-beam pattern. As a result, even when the oncoming vehicle is actually present, the glare can be suppressed. It is to be noted that, when the degree of the sharp curve is larger than the given value (that is, a radius-of-curvature of the curve is smaller than a threshold), the speed of the own vehicle is presumed to be low so that the necessity for the high-beam pattern for illuminating a long-distance area is lowered. As a result, even when the light distribution pattern is preferentially switched to the low-beam pattern, an effect exerted on the visibility of the driver of the own vehicle is small.

The low-beam pattern may include a special low-beam pattern which brings an opposite lane side into a low-beam state and brings an own vehicle's lane side into a high-beam state. The control section may give priority to switching to the special low-beam pattern in the case where the information indicates the curved road condition sharper than that of the reference curved road. By preferentially selecting the special low-beam pattern when the degree of the sharp curve is larger than the given value, the own vehicle's lane side maintains the high-beam state so that a state where the view of the driver of the own vehicle is secured can be maintained. On the other hand, by bringing the opposite lane side into the low-beam state, even when the oncoming vehicle is present, the glare can be made less likely to be given to the driver of the oncoming vehicle.

As a curved road condition serving as a trigger for switching from the low-beam pattern to the high-beam pattern, the control section may set a curved road condition gentler than that of the reference curved road serving as the trigger for switching from the high-beam pattern to the low-beam pattern. A first threshold radius-of-curvature as the trigger for switching the light distribution pattern from the low-beam pattern to the high-beam pattern may be larger than a second threshold radius-of-curvature as the trigger for switching the light distribution pattern from the high-beam pattern to the low-beam pattern. According to this aspect, when the light distribution pattern is switched from the high-beam pattern to the low-beam pattern due to the curved road condition of the road, the low-beam state is maintained for some period of time after the curved road condition becomes gentle. As a result, even on a mountain road where the curved road condition is frequently changed, frequent switching back to the high-beam pattern is suppressed, and troublesomeness can be made less likely to be given to the driver.

In accordance with the embodiments, the control apparatus for the vehicle lamp may switch the light distribution pattern between the low-beam pattern and the high-beam pattern. When the control apparatus performs switching control of the light distribution pattern on a basis of information indicative of a situation ahead of an own vehicle, in a case where the information indicates presence of a forward vehicle, the control apparatus may perform the switching control of the light distribution patterns according to positional information on the forward vehicle and, in a case where the information indicates a curved road condition sharper than that of a reference curved road (that is, a radius-of-curvature of the curved road is smaller than a threshold), the control apparatus may give priority to switching to the low-beam pattern irrespective of presence or absence of the forward vehicle.

According to this aspect, even when the degree of the sharp curve is larger than the given value (that is the radius-of-curvature of the curved road is smaller than the threshold) so that the presence of the actual oncoming vehicle or the like can not be recognized due to the mountain or the obstacle, the control apparatus presumes the possibility of presence of the oncoming vehicle or the like on the basis of the shape of the vehicle, and preferentially switches the light distribution pattern to the low-beam pattern. As a result, the control apparatus can smoothly control the vehicle lamp capable of suppressing the glare even when the oncoming vehicle is actually present.

Moreover, in accordance with the embodiments, the vehicle lamp may be configured to be capable of switching the light distribution pattern between the low-beam pattern and the high-beam pattern according to the positional information on the forward vehicle, and also capable of preferential switching to the low-beam pattern according to information indicative of the curved road condition sharper than that of a reference curved road.

According to this aspect, even when the degree of the sharp curve is larger than the given value so that the presence of the actual oncoming vehicle or the like can not recognized due to the mountain or the obstacle, it becomes possible to presume the possibility of presence of the oncoming vehicle or the like on the basis of the shape of the road, and preferentially switch the light distribution pattern to the low-beam pattern. As a result, it is possible to provide the vehicle lamp capable of effectively suppressing the glare even when the oncoming vehicle is actually present.

According to the embodiments, it is possible to automatically select the light distribution pattern which does not give glare to an oncoming vehicle or the like even during running on a sharply curved road.

<Exemplary Embodiment>

An exemplary embodiment of the invention will be described in detail referring to the drawings.

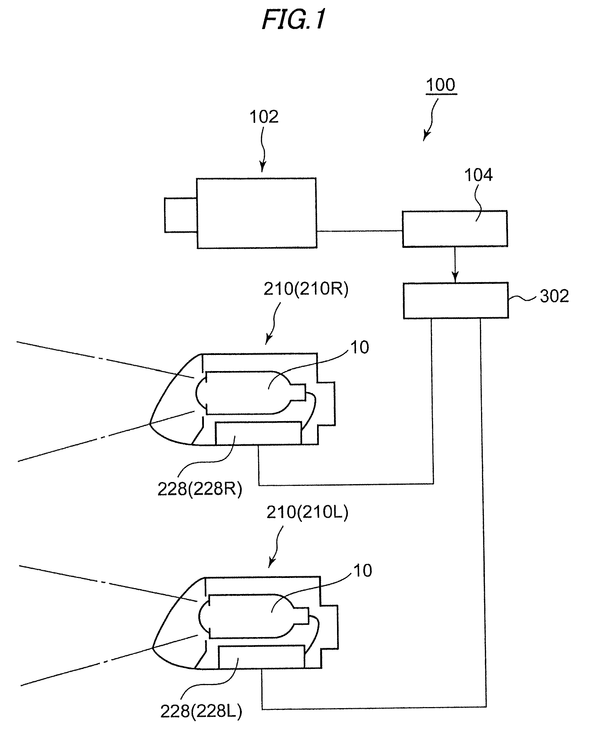

FIG. 1 is a conceptual view of a configuration of a vehicle lighting system 100 of the exemplary embodiment. The vehicle lighting system 100 is configured mainly of a control section 302 to which an image pickup unit 102 and a detection unit 104 are connected, and a lighting unit 210 including a vehicle lamp 10. In the exemplary embodiment, a left side lighting unit 210L and a right side lighting unit 210R are disposed at end portions in a vehicle width direction of a vehicle. The vehicle lamp 10 included in each of the lighting units 210L and 210R of the exemplary embodiment is what is called an adaptive front-lighting system which forms a low-beam pattern by, e.g., blocking a part of a beam emitted from one light source, and forms a high-beam pattern when the beam is not blocked.

The vehicle lamp 10 included in each of the lighting units 210L and 210R is capable of forming a plurality of types of light distribution patterns emitted in a forward direction of a vehicle orthogonal to the vehicle width direction. Each of the lighting units 210L and 210R is capable of forming a low-beam pattern and a high-beam pattern used in a region where left-hand traffic is prescribed by traffic regulations. In addition, each of the lighting units 210L and 210R may include a vehicle lighting unit capable of forming a right-hand traffic low-beam pattern called a "Dover low beam" used in a region where right-hand traffic is prescribed by traffic regulations, and a special low-beam pattern which brings an opposite lane side into a low-beam state and an own vehicle's lane side into a high-beam state.

The image pickup unit 102 can be configured of a vehicle-mounted CCD camera which picks up an image including a situation outside the vehicle which is illuminated by light of the vehicle lamp 10. The image pickup unit 102 is preferably fixed to a position overlooking the forward direction of the vehicle such as, e.g., a bracket on the back side of a room mirror, the inside of a windshield, or a position on a dashboard. An image pickup range of the image pickup unit 102 includes at least an own vehicle's lane on which the own vehicle runs, an opposite lane, and a road shoulder in an area ahead of the own vehicle, and is preferably a range including an illumination area of the high-beam pattern. In addition, in the case of a road with a plurality of lanes in one direction, the image pickup range thereof includes the own vehicle's lane and at least lanes on the left and right of the own vehicle's lane, and is preferably a range including the illumination area of the high-beam pattern. Image data picked up by the image pickup unit 102 is provided to the detection unit 104. The detection unit 104 performs processing of the image data on the basis of information provided from the image pickup unit 102, and performs detection of forward vehicles such as a leading vehicle and an oncoming vehicle and detection of presence positions thereof, and detection of a pedestrian and the like ahead of the own vehicle. The detection of the leading vehicle and the oncoming vehicle, and the detection of the pedestrian and the like can be executed by employing known methods such as, e.g., image processing using pattern matching and the like. In addition, in the case of nighttime, the detection of the leading vehicle and the oncoming vehicle can be executed by detecting a light point of a tail lamp or a headlamp. For example, in the case of the tail lamp, two red light points exhibit similar movements. When such red light points can be recognized, the leading vehicle can be regarded to be present. Further, in the case of a headlight, two white or yellow light points exhibit similar movements. When such white or yellow light points can be recognized, the oncoming vehicle can be regarded to be present. Furthermore, the detection unit 104 may perform detection of a white line, a curbstone, and a guardrail on the basis of the image data provided from the image pickup unit 102 to detect the shape of the road on which the own vehicle is running.

The detection unit 104 provides detected information on the situation outside the own vehicle to the control section 302, and the control section 302 provides instructions based on the information to illumination control sections 228L and 228R of the lighting units 210L and 210R. Subsequently, the illumination control sections 228L and 228R control the vehicle lamps 10 such that the vehicle lamps 10 form a light distribution pattern suitable for the situation outside the own vehicle.

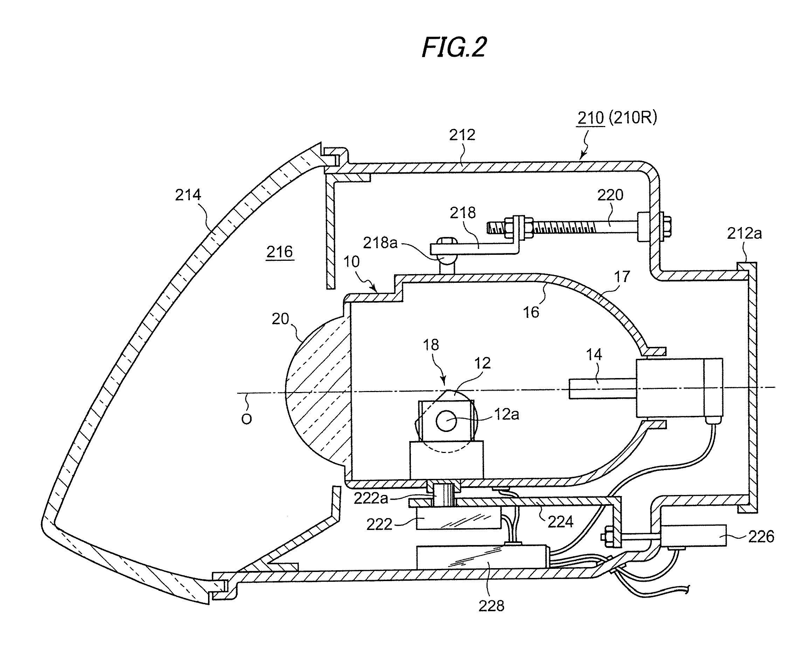

FIG. 2 is a schematic cross-sectional view explaining an internal structure of the lighting unit 210 included in the vehicle lighting system 100 of the exemplary embodiment. The lighting unit 210 is the adaptive front-lighting system disposed each on the left and the right in the vehicle width direction of the vehicle, and structures thereof disposed on the left and the right are substantially equal to each other so that the structure of the lighting unit 210R disposed on the right side of the vehicle will be described as the representative. The lighting unit 210R includes a lamp body 212 and a transparent cover 214. The lamp body 212 has an opening portion in the forward direction of the vehicle and a detachable cover 212a on the rear side which is detached when a bulb 14 is replaced. In addition, the transparent cover 214 is connected to the opening portion in the front of the lamp body 212, and a lighting chamber 216 is thereby formed. In the lighting chamber 216, there is accommodated the vehicle lamp 10 for emitting light in the forward direction of the vehicle. In a part of the vehicle lamp 10, there is formed a lamp bracket 218 having a pivot mechanism 218a serving as a swing center of the vehicle lamp 10. The lamp bracket 218 is screwed with an aiming adjustment screw 220 which is rotatably supported on a wall surface of the lamp body 212. Accordingly, the vehicle lamp 10 is supported at a given position in the lighting chamber 216 in a tilted attitude set by the adjustment state of the aiming adjustment screw 220.

In addition, to the lower surface of the vehicle lamp 10, a rotational shaft 222a of a swivel actuator 222 is fixed, and the vehicle lamp 10 is thereby rotatable in the horizontal direction.

The swivel actuator 222 is fixed to a unit bracket 224. To the unit bracket 224, a leveling actuator 226 disposed outside the lamp body 212 is connected, and the vehicle lamp 10 is thereby tiltable in the vertical direction.

On an inner wall surface of the lighting chamber 216, e.g., at a position below the vehicle lamp 10, there is disposed the illumination control section 228 which executes turning on/off control of the vehicle lamp 10 and formation control of the light distribution pattern. The illumination control section 228 may also execute control of the swivel actuator 222 and the leveling actuator 226. It is to be noted that the illumination control section 228 may also be provided outside the lighting unit 210R. It addition, the function thereof may be limited to only a function of relaying the control of the turning on/off or the like from the vehicle side.

The vehicle lamp 10 is configured of a shade mechanism 18 including a rotational shade 12, the bulb 14 as a light source, a lamp housing 17 supporting a reflector 16 on an inner wall, and a projection lens 20. As the bulb 14, for example, an incandescent lamp, a halogen lamp, a discharge lamp, and an LED can be used. The exemplary embodiment shows an example in which the bulb 14 is configured of the halogen lamp. The reflector 16 reflects light emitted from the bulb 14. A part of the light from the bulb 14 and the light reflected by the reflector 16 is guided to the projection lens 20 via the shade mechanism 18.

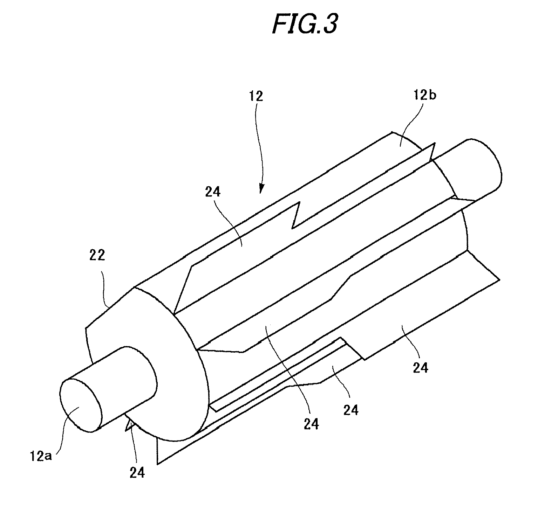

FIG. 3 is a schematic perspective view of the rotational shade 12. The rotational shade 12 is a cylindrical member rotatable about a rotational shaft 12a. In addition, the rotational shade 12 has a notched portion 22 obtained by notching a part thereof in an axial direction, and holds a plurality of tabular shade plates 24 on an outer circumferential surface 12b other than the notched portion 22. The rotational shade 12 is capable of moving the notched portion 22 or any one of the shade plates 24 to a position on a rear focal surface including a rear focal point of the projection lens 20 in accordance with its rotational angle. Subsequently, there is formed a light distribution pattern in conformity with a shape of a ridge portion of the shade plate 24 positioned on an optical axis O in accordance with the rotational angle of the rotational shade 12. For example, by blocking a part of light emitted from the bulb 14 by moving any one of the shade plates 24 onto the optical axis O, there can be formed a standard low-beam pattern or a special low-beam pattern including features of the low-beam pattern as a part thereof. Further, by not blocking the light emitted from the bulb 14 by moving the notched portion 22 onto the optical axis O, a high-beam pattern can be formed. It is to be noted that, in accordance with the shape of the shade plate 24, it is also possible to form, e.g., a light distribution pattern having a concave light-blocking area, and a special high-beam pattern including features of the high-beam pattern as a part thereof such as the one having a doughnut-shaped light-blocking area in the center.

The rotational shade 12 can be rotated using, e.g., motor drive, and by controlling the rotation amount of the motor, the shade plate 24 or the notched portion 22 for forming a desired light distribution pattern is moved onto the optical axis O. It is to be noted that the rotational shade 12 may be provided only with a light-blocking function of forming the low-beam pattern and the special low-beam pattern with the notched portion 22 on the outer circumferential surface 12b of the rotational shade 12 being omitted. When the high-beam pattern is formed, the rotational shade 12 may be arranged to be retreated from the position of the optical axis O by driving, e.g., a solenoid or the like. In this case, since the rotational shade 12 does not have the notched portion 22, for example, even when the motor for rotating the rotational shade 12 fails, the light distribution pattern is fixed to the low-beam pattern, or a light distribution pattern similar thereto. That is, it is possible to realize a fail-safe function which reliably avoids the case where the rotational shade 12 is fixed in its attitude for forming the high-beam pattern.

It is to be noted that the shade mechanism 18 may be configured of a tabular shade. In the case where the shade mechanism 18 is configured of the tabular shade, for example, the shade advances onto the optical axis and blocks light to form the low-beam pattern, and retreats from the optical axis and ceases to block the light to form the high-beam pattern. In addition, when the tabular shade is divided into a plurality of portions in the vehicle width direction, and the individual portions are arranged to be capable of moving between a light-blocking position and a non-light-blocking position, it is also possible to form the special low-beam pattern which brings a part thereof into the low-beam state and the remaining part thereof into the high-beam state. Similarly, it is also possible to form the special high-beam pattern. In this case, the tabular shade may be moved in the vertical direction orthogonal to the optical axis, or may be rotated about a rotational shaft supporting one end side of the tabular shade.

In accordance with an operation state of a light switch operated by a driver, the control section 302 causes the rotational shade 12 to rotate to select one of a plurality of the light distribution patterns. This mode is called a manual selection mode. In addition, in accordance with the situation outside the vehicle acquired by the image pickup unit 102, the control section 302 causes the rotational shade 12 to rotate to automatically select one of the plurality of the light distribution patterns. This mode is called an automatic selection mode. When the lighting unit 210 is in a turned-on state and, for example, the leading vehicle is present ahead in the own vehicle' lane and the oncoming vehicle or the pedestrian is present in the opposite lane, the control section 302 moves the shade for forming the low-beam pattern onto the optical axis. By forming the low-beam pattern, it is possible to suppress glare given to the leading vehicle in the own vehicle's lane and the oncoming vehicle or the pedestrian in the opposite lane. In addition, when no leading vehicle is present ahead in the own vehicle's lane, and no oncoming vehicle or pedestrian is present in the opposite lane, the control section 302 moves the notched portion for forming the high-beam pattern onto the optical axis. By forming the high-beam pattern, it is possible to widen a visibility range of a driver of the own vehicle. Further, when the leading vehicle is present ahead in the own vehicle's lane, and no oncoming vehicle or pedestrian is present in the opposite lane, the control section 302 moves the shade for forming the special low-beam pattern which brings the own vehicle's lane side into the low-beam state and brings only the opposite lane side into the high-beam state onto the optical axis. Since the special low-beam pattern brings the right side into the high-beam state, the special low-beam pattern is sometimes referred to as a right-side high-beam pattern. By forming this light distribution pattern, it is possible to widen the visibility range on the opposite lane side, while suppressing the glare to the leading vehicle on the own vehicle's lane side. Similarly, when no leading vehicle is present ahead in the own vehicle's lane, and the oncoming vehicle or the pedestrian is present in the opposite lane, the control section 302 moves the shade for forming the special low-beam pattern which brings the own vehicle's lane side into the high-beam state and brings only the opposite lane side into the low-beam state onto the optical axis. Since the special low-beam pattern beings the left side into the high-beam state, the special low-beam pattern is sometimes referred to as a left-side high-beam pattern. By forming this light distribution pattern, it is possible to suppress the glare to the oncoming vehicle or the pedestrian on the opposite lane side, while realizing the widening of the visibility range of the driver of the own vehicle on the own vehicle's lane side.

When the switching of the light distribution pattern described above is performed in the manual selection mode, the switching is executed on the basis of grasping of the surrounding situation by the driver and, in the case of the automatic selection mode, the switching is automatically executed on the basis of the information acquired by the image pickup unit 102 or the like. By utilizing the automatic selection mode, even in the situation where it is difficult to use the high-beam pattern, the special low-beam pattern, and the left and right-side high-beam patterns on the basis of the judgment by the driver, the utilization thereof is promoted, and the effective use of the high beam can be achieved. In addition, the visibility range of the driver is widened so that an increase in the feeling of security of the driver is facilitated. It is to be noted that the switching between the manual selection mode and the automatic selection made may be performed by the operation of the driver, or the basic state may be set to, e.g., the automatic selection mode, and the automatic selection mode may be shifted to the manual selection mode by the operation of the driver. In addition, the above-described procedures may be reversely executed. Further, the automatic selection mode may be enabled with a turning-on operation of the lighting unit 210 by the driver used as a requirement. A configuration may also be adopted in which, when a sensor detects that an illuminance around the own vehicle is reduced to be lower than a given value, the lighting unit 210 is automatically turned on, and the automatic selection mode is enabled.

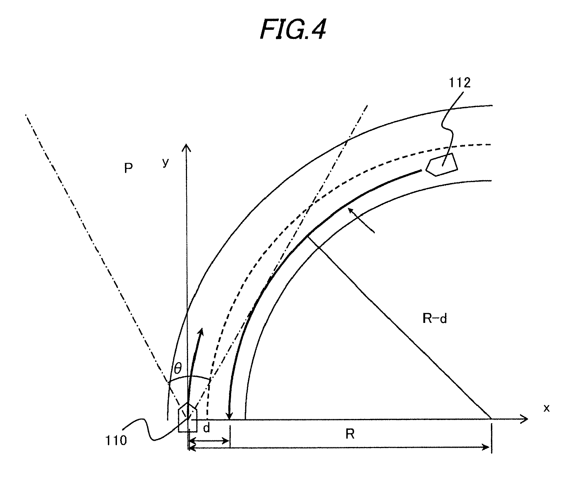

Incidentally, as shown in FIG. 4, the image pickup unit 102 mounted on the vehicle forms a detection area P which laterally spreads with a substantially front position of an own vehicle 110 as the center thereof. An angle of view θ of the image pickup unit 102 can be set to, e.g., $\pm 15°$ in a lateral direction (θ = 30° in total). In this case, when the own vehicle 110 is running on a straight or a relatively gently curved road, the forward vehicle present ahead of the own vehicle 110 can be easily detected. However, as shown in FIG. 4, when the own vehicle 110 is running on a sharply curved road in a curved road condition sharper than that of a reference curved road, and passes by an oncoming vehicle 112, there is a case where the oncoming vehicle 112 is detected as if the oncoming vehicle 112 has suddenly approached from a lateral side of the detection area P. In this case, depending on the degree of the sharp curve, the oncoming vehicle 112 sometimes does not enter the detection area P even when the oncoming vehicle 112 is extremely close to the own vehicle 110 and, as a result, there is a case where the oncoming vehicle 112 can not be recognized, or the detection is delayed as compared with the detection on the straight road or the like. When the switching of the light distribution pattern of the vehicle lamp is controlled on the basis of the presence or absence of the oncoming vehicle or the like, a conventional vehicle lighting system judges that the oncoming vehicle 112 is not present until the actual oncoming vehicle 112 is detected. That is, the conventional vehicle lighting system performs control such that priority is given to the securement of the view of the driver of the own vehicle 110 and the high beam is turned on. As a result, if the oncoming vehicle 112 is present close to the own vehicle, there is a case where the glare is disadvantageously given to the oncoming vehicle 112.

To cope with that, when the vehicle lighting system 100 of the exemplary embodiment judges that the own vehicle 110 is running on the road in the curved road condition sharper than that of the reference curved road, i.e., when the oncoming vehicle 112 is present in a blind spot formed by the sharply curved road, and when the vehicle lighting system 100 judges that the glare can not be suppressed properly when the oncoming vehicle 112 moves out of the blind spot, the vehicle lighting system 100 preferentially switches the light distribution pattern of the vehicle lamp 10 to the low-beam pattern irrespective of presence or absence of the oncoming vehicle 112. That is, when the own vehicle 110 is running on the sharply curved road, the vehicle lighting system 100 performs control of forcibly switching the light distribution pattern to the low-beam pattern to give priority to the suppression of the glare.

First, the description will be given of a method for determining a threshold for judging whether or not the road is a road in a curved road condition sharper than that of the reference curved road in the exemplary embodiment. In FIG. 4, it is assumed that an angle of view of the image pickup unit 102 is denoted by θ, a radius of curvature of a road of an own vehicle's lane of the own vehicle 110 is denoted by R, and a distance from the own vehicle's lane to an opposite lane is denoted by d. When R is reduced (sharp curve), as described above, there is a case where the oncoming vehicle 112 never enters the detection area (image pickup area) of the image pickup unit 102 before the oncoming vehicle 112 passes by the own vehicle 110. In this case, the own vehicle 110 can not detect the oncoming vehicle 112, and passes by the oncoming vehicle 112 with the high beam kept turned on. Accordingly, a range of R where the detection area and a travel locus of the oncoming vehicle 112 do not intersect each other is firstly determined. As shown in FIG. 4, when x and y axes are given, a detection area boundary of the image pickup unit 102 can be represented by the following Expression (1).

$$\text{Expression (1):} \quad y = \tan\left(90° - \theta/2\right) \bullet x \qquad \dots (1)$$

In addition, an arc of the travel locus of the oncoming vehicle 112 is represented by the following Expression (2).

$$\text{Expression (2):} \quad (x - R)^2 + y^2 = (R - d)^2 \qquad \dots (2)$$

The range of R where the detection area and the travel locus of the oncoming vehicle 112 do not intersect each other is obtained when Expression (1) and Expression (2) are tangent to each other at one point. A point of intersection of Expression (1) and Expression (2) is represented by the following Expression (3).

Expression (3):

$$\left\{1 + \tan^2\left(90° - \theta/2\right)\right\} \bullet x - 2Rx + R^2 - (R - d)^2 = 0 \qquad \dots (3)$$

Consequently, it is appropriate to determine R satisfying the following Expression (4).

Expression (4):

$$R^2 - \left\{1 + \tan^2\left(90° - \theta/2\right)\right\} \bullet \left\{R^2 - (R - d)^2\right\} = 0 \qquad \dots (4)$$

From the above-mentioned Expression (4), R is determined as in the following Expression (5).

Expression (5):

$$R = d \bullet \tan^2\left(90° - \theta/2\right) + \sqrt{d^2 \bullet \tan^4\left(90° - \theta/2\right) - \tan^2\left(90° - \theta/2\right) - 1} \qquad \dots (5)$$

As an example, when consideration is given to a case where a width between lanes d = 3.5 m and the angle of view of the image pickup unit 102 θ = 30° are satisfied, R ≈ 97 m is established from the above-mentioned Expression (5). The value of R can be set as a sharp curve judgment threshold.
Incidentally, when trying to recognize that the road on which the own vehicle 100 is running is a road in the curved road condition sharper than that of the reference curved road, i.e., the road is a road having R of not more than 97 m in the example described above, the recognition can be achieved by, e.g., performing image processing on the image of the actual road acquired by the image pickup unit 102 to calculate the radius of curvature of the road. Further, in addition to the method for detecting the shape of the entire road, the radius of curvature of the road can also be calculated by detecting white lines such as a centerline and an outside line of a roadway, or detecting a curbstone. Furthermore, it is also possible to acquire the radius of curvature of the road on which the own vehicle 110 is currently running on the basis of information on the shape of the road held by map information of a navigation system and information on the shape of the road provided by an external road traffic information system. Moreover, it is also possible to estimate the radius of curvature of the road on which the own vehicle 110 is currently running using a steering angle of steering of the own vehicle 110. Similarly, it is also possible to estimate the radius of curvature of the road on which the own vehicle 110 is currently running using a yaw rate detected when the own vehicle 110 turns along the curved road.
For example, a steering angle (str) in correspondence to the sharp curve judgment threshold can be determined from Expression (6) of a steady circular turn.

$$\text{Expression (6):} \quad R = \left(1 + Av^2\right) \bullet L \bullet G / str \qquad \dots (6)$$

Herein, A represents a stability factor, L represents a wheelbase, G represents a steering gear ratio, and v represents a vehicle velocity.

Similarly, a yaw rate Y in correspondence to the sharp curve judgment threshold can be determined from the following Expression (7).

$$\text{Expression (7):} \quad Y = v / R \qquad \dots (7)$$

It is to be noted that, since it is actually necessary to add processing time required from the recognition of the oncoming vehicle 112 to the start of control of the vehicle lamp 10 after the oncoming vehicle 112 enters the detection area P of the image pickup unit 102 or the like, a value obtained in consideration of a margin for the processing time is preferably set as the sharp curve judgment threshold.

In the vehicle lighting system 100 of the exemplary embodiment, when the own vehicle 110 is running on the road in the curved road condition sharper than that of the reference curved road, i.e., the road of not less than the above-described sharp curve judgment threshold, the illumination state of the vehicle lamp 10 is switched such that the low-beam pattern is preferentially formed. In addition, when the operation of the steering angle in correspondence to the sharp curve judgment threshold is performed, or when the yaw rate in correspondence to the sharp curve judgment threshold is generated, the illumination state of the vehicle lamp 10 is similarly switched such that the low-beam pattern is preferentially formed.

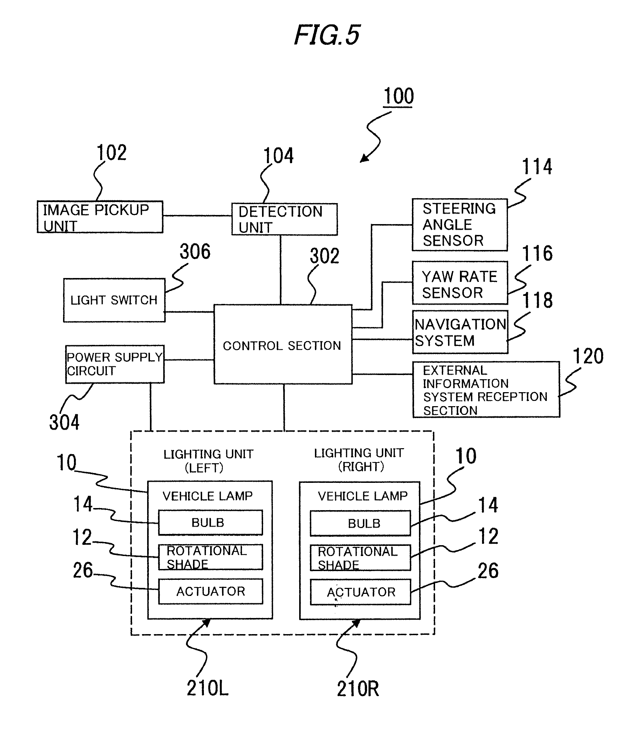

FIG. 5 is a functional block diagram with the control section 302 in the above-described vehicle lighting system 100 positioned in the center.

As described above, the vehicle lighting system 100 performs switching control of the light distribution patterns of the left side lighting unit 210L and the right side lighting unit 210R on the basis of the information indicative of the situation ahead of the own vehicle provided to the control section 302. Between the control section 302 and the lighting units 210L and 210R, a power supply circuit 304 is connected. The power supply circuit 304 supplies power to the bulb 14 and an actuator 26 in each of the lighting units 210L and 210R, and other devices, and drives them on the basis of instructions from the control section 302.

To the control section 302, the information acquired by the image pickup unit 102 is provided via the detection unit 104. The information provided by the image pickup unit 102 includes presence information and positional information on the forward vehicle ahead of the own vehicle 110. Based on the information, the control section 302 executes the switching control of the light distribution pattern in accordance with the presence and the position of the actually recognized forward vehicle as normal control.

In addition, to the control section 302, there is inputted information for judging whether or not the shape of the road on which the own vehicle 110 is running is the road in the curved road condition sharper than that of the reference curved road. For example, at least one of a steering angle sensor 114, a yaw rate sensor 116, a navigation system 118, and an external information system reception section 120 is connected to the control section 302, and the control section 302 accepts the provision of required information.

With the information from the steering angle sensor 114, when it is found that the steering angle is not less than the steering angle in correspondence to the above-described sharp curve judgment threshold, e.g., not less than 80° (when the front position of the own vehicle is assumed to be 0°), the control section 302 judges that the own vehicle 110 is running on the sharply curved road sharper than that of the reference curved road. Subsequently, the control section 302 controls the actuator 26 for driving the rotational shade 12 of each of the lighting units 210L and 210R such that each of the vehicle lamps 10 forms the low-beam pattern irrespective of the presence or absence of the forward vehicle including the oncoming vehicle. As a result, even when the oncoming vehicle is present in the blind spot formed by the sharply curved road, the low-beam pattern can be formed before the oncoming vehicle 112 moves out of the blind spot. As a result, if the oncoming vehicle 112 is present, the glare can be suppressed. It is to be noted that the steering angle for judging the curve as the sharp curve is provided with a hysteresis so that the light distribution pattern is not immediately switched to the high-beam pattern when the steering angle is returned to the previous angle after the curve is judged as the sharp curve. With this arrangement, the turning on/off of the high-beam pattern is not frequently performed. As a result, troublesomeness felt by a driver resulting from the frequent switching is lessened. The steering angle for switching the low-beam pattern which has been preferentially set as a result of judging the road as the sharply curved road back to the high-beam pattern can be set to, e.g., 25°. It is to be noted that, when the oncoming vehicle or the like is recognized using the information from the image pickup unit 102, the low-beam pattern is selected in order to prevent the glare to the oncoming vehicle irrespective of the steering angle. It is to be noted that, even when the light distribution pattern is forcibly switched from the high-beam pattern to the low-beam pattern during running on the sharply curved road, the speed of the own vehicle 110 running on the sharply curved road is presumed to be low. Consequently, in this case, the necessity for the high-beam pattern for checking the long-distance area is low and, therefore, even when the light distribution pattern is forcibly switched to the low-beam pattern, it can be regarded that an effect is not substantially exerted on the driving operation.

In addition, with the information from the yaw rate sensor 116, when it is found that the yaw rate is not less than the yaw rate in correspondence to the above-described sharp curve judgment threshold, e.g., not less than 10°/sec, the control section 302 judges that the own vehicle 110 is running on the sharply curved road sharper than the reference curved road. Subsequently, the control section 302 causes each of the vehicle lamps 10 to form the low-beam pattern. It is to be noted that the yaw rate for judging the curve as the sharp curve is also provided with the hysteresis so that the light distribution pattern is not immediately switched to the high-beam pattern even when the yaw rate is lowered after the curve is judged as the sharp curve. The yaw rate for switching the light distribution pattern from the preferentially set low-beam pattern back to the high-beam pattern can be set to, e.g., 5°/sec. It is to be noted that the yaw rate for judging that the road is the sharply curved road may have a range of, e.g., 10°/sec to 20°/sec. Similarly, the yaw rate for judging that the road is not the sharply curved road may have a range of, e.g., 5°/sec to 15°/sec. By providing the setting ranges in this manner, it is possible to absorb an error caused when the yaw rate is changed by a factor other than the shape of the road. It is to be noted that, in this case as well, when the oncoming vehicle or the like is recognized using the information from the image pickup unit 102, the low-beam pattern is selected in order to prevent the glare to the oncoming vehicle irrespective of the yaw rate.

As the information indicative of the shape of the road on which the own vehicle 110 is currently running, information related to, e.g., the radius of curvature may be acquired via the navigation system 118 or the external information system reception section 120. In this case as well, when the information related to the radius of curvature having a value not less than the value in correspondence to the above-described sharp curve judgment threshold is obtained, the control section 302 judges that the own vehicle 110 is running on the sharply curved road sharper than the reference curved road. Subsequently, the control section 302 preferentially forms the low-beam pattern. In this case as well, the radius of curvature for judging the curve as the sharp curve is provided with the hysteresis so that the light distribution pattern is not immediately switched to the high-beam pattern even when the own vehicle 110 moves to a gently curved road after the curve is judged as the sharp curve, and the troublesomeness felt by the driver resulting from the frequent switching of the light distribution pattern is thereby lessened. It is to be noted that, as for the information indicative of the shape of the road provided from the navigation system 118 or the external information system reception section 120, information indicative of the shape of the road a given distance ahead of the current position of the own vehicle 110 can also be acquired in advance. Consequently, control may be performed such that the formation of the high-beam pattern is prohibited on the basis of the shape of the distant road.

It is to be noted that the steering angle sensor 114, the yaw rate sensor 116, the navigation system 118, and the external information system reception section 120 are singly capable of providing the information which allows the judgment of whether or not the road on which the own vehicle 110 is running is the sharply curved road. In another embodiment, the judgment of whether or not the road is the sharply curved road may be performed on the basis of a plurality of information items by appropriately combining the steering angle sensor 114, the yaw rate sensor 116, the navigation system 118, and the external information system reception section 120. In this case, the precision in the sharp curve road judgment can be enhanced.

In addition, as described above, since it is possible to perform the judgment of whether or not the road on which the own vehicle 110 is running is the sharply curved road by using the information from the image pickup unit 102, the steering angle sensor 114, the yaw rate sensor 116, the navigation system 118, and the external information system reception section 120 may be omitted. In this case, the advantage is achieved that the system configuration can be simplified.

Besides, to the control section 302, a light switch 306 is connected. The light switch 306 is disposed, e.g., in a steering column or an instrument panel, and controls the actuator 26 and the bulb 14 using an operation by the driver to manually control the formation of the low-beam pattern and the formation of the high-beam pattern. In addition, the light switch 306 may be arranged to be capable of manually implementing switching of selection of a light distribution pattern having a special shape.

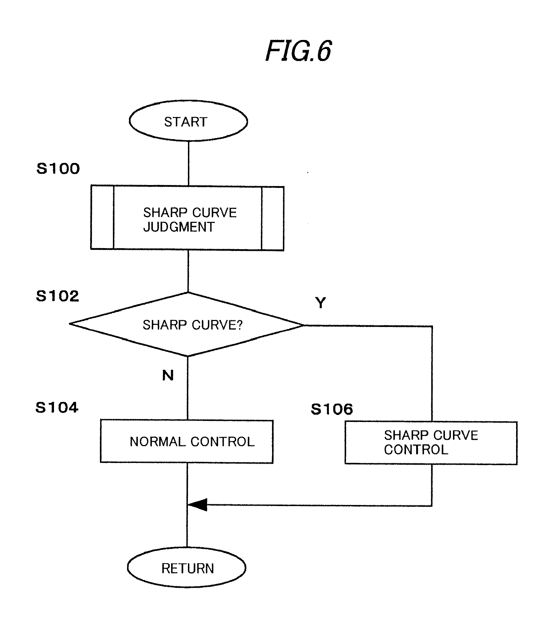

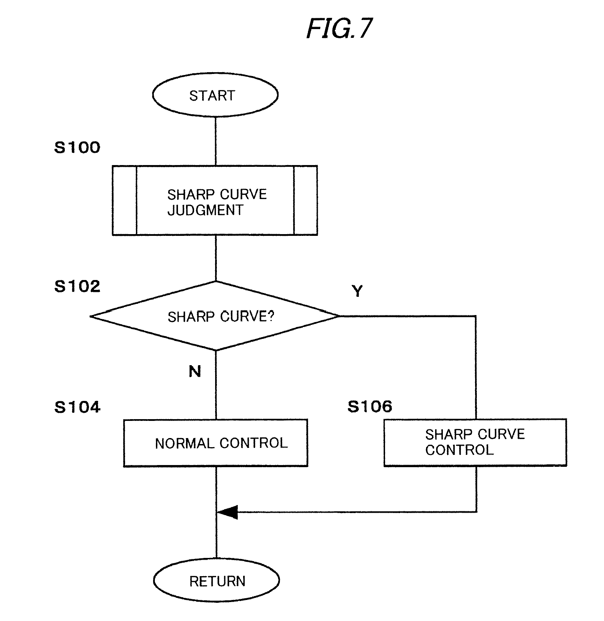

By using flowcharts of FIGS. 6 and 7, the description will be given of judgment processing of the sharply curved road and switching control of the light distribution pattern when the vehicle lighting system 100 operates in the automatic selection mode in which an appropriate light distribution pattern is automatically selected in accordance with the surrounding situation.

The control section 302 in the automatic selection mode executes sharp curve judgment processing which judges whether or not the road on which the own vehicle 110 is currently running is the sharply curved road at a given period, e.g., 50 m/s (S100). Subsequently, when judging that the current road is not the sharply curved road (N of S102), the control section 302 executes normal light distribution pattern selection control as normal control (S104). In this case, the control section 302 performs detection of the forward vehicle or the pedestrian on the basis of the image information provided from the image pickup unit 102 and, when detecting the forward vehicle or the pedestrian, the control section 302 executes control so as to form the low-beam pattern to give priority to the glare suppression. In addition, when detecting no forward vehicle or pedestrian, the control section 302 executes control so as to form the high-beam pattern to give priority the improvement in the view of the driver of the own vehicle. Subsequently, the control section 302 moves on to the sharp curve judgment processing at the next period. On the other hand, in S102, when judging that the current road is the sharply curved road in the curved road condition sharper than that of the reference curved road (Y of S102), the control section 302 executes sharp curve control (S106). That is, the control section 302 performs control such that the low-beam pattern is preferentially formed irrespective of the presence or absence of the forward vehicle or the pedestrian. As a result, even when the oncoming vehicle or the like is present in the blind spot formed by the sharply curved road, the low-beam pattern is formed before the oncoming vehicle or the like moves out of the blind spot. That is, even if the oncoming vehicle is present, the glare can be suppressed. Subsequently, the control section 302 moves on to the sharp curve judgment processing at the next period.

FIG. 7 is the flowchart explaining details of the sharp curve judgment processing of S100 in FIG. 6. It is to be noted that FIG. 7 shows an example in which the sharp curve judgment is executed by using the yaw rate. When it has been judged that the curve is not the sharp curve in the previous sharp curve judgment processing (N of S200), in a case where the absolute value of the yaw rate provided from the yaw rate sensor 116 does not exceed the yaw rate in correspondence to the sharp curve judgment threshold, e.g., X1 = 10°/sec, i.e., in a case where |yaw rate| X1 is satisfied (N of S202), the control section 302 judges that "the road is not the sharply curved road" (S204), and moves on to the normal control of S104 to select the light distribution pattern in accordance with the situation ahead of the own vehicle. In addition, in S202, in a case where |yaw rate| > X1 is satisfied (Y of S202), the control section 302 judges that "the road is the sharply curved road" (S206), and moves on to the sharp curve control of S106 to preferentially select the low-beam pattern.

Further, in S200, when it has been judged that "the road is the sharply curved road" in the previous sharp curve judgment processing (Y of S200), i.e., when the lighting unit 210 in the turned-on state forcibly forms the low-beam pattern, in a case where the absolute value of the yaw rate provided from the yaw rate sensor 116 does not exceed a value indicative of deviation from the sharp curve, e.g., X2 = 5°/sec, i.e., in a case where |yaw rate| ≤ 2 is satisfied (N of S208), the control section 302 judges that "the road is not the sharply curved road" (S210). That is, the control section 302 judges that the own vehicle has deviated from the sharply curved road, and moves on to the normal control of S104 to select the light distribution pattern in accordance with the situation ahead of the own vehicle. At this point, when the forward vehicle is not present, the high-beam pattern is selected. In addition, in S208, in a case where |yaw rate| > X2 is satisfied (Y of S208), the control section 302 judges that "the road is the sharply curved road" (S212). That is, the control section 302 judges that the own vehicle is currently running on the sharply curved road, maintains the sharp curve control of S106, and continues the preferential selection of the low-beam pattern.

In the above-described embodiment, the description has been given of the example in which the lighting unit 210 forms the normal low-beam pattern when it is judged that the own vehicle is running on the sharply curved road. However, the sharply curved road is often found in a mountain road and, in a mountainous area, the number of street lights is smaller and it is darker than in an urban area. In a case where the light distribution pattern is suddenly switched to the low-beam pattern when the own vehicle is running on the road with the high-beam pattern turned on, the driver sometimes feels as if the view is narrowed. To cope with that, the rotational shade 12 of the vehicle lamp 10 may form a special low-beam pattern which brings the opposite lane side into the low-beam state and brings the own vehicle's lane side into the high-beam state as one type of the low-beam pattern. The special low-beam pattern is also referred to as what is called a "left-side high-beam pattern" in a region where left-hand traffic is prescribed by traffic regulations.

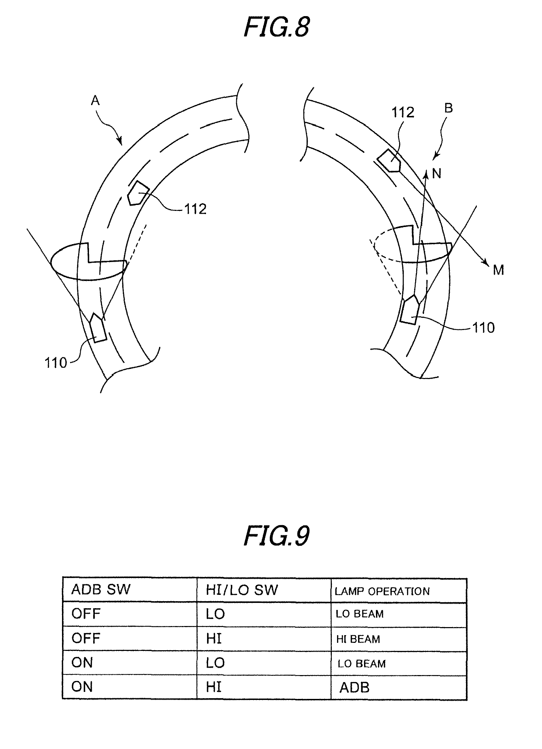

FIG. 8 is a view of a sharply curved road in a left-hand traffic region, and shows a sharply right-curved road A and a sharply left-curved road B. Consideration will be given to a case where it is judged that the own vehicle is running on the sharply curved road in the curved road condition sharper than that of the reference curved road, and the light distribution pattern is preferentially switched to the low-beam pattern when the vehicle lighting system 100 of the exemplary embodiment operates in the automatic selection mode, as described above. In addition, consideration will be given to a case where the own vehicle 110 is running on the sharply right-curved road A. In this case, the oncoming vehicle 112 approaches toward the own vehicle 110 from the right side. Since the special low-beam pattern to be set brings the opposite lane side into the low-beam state, even when the oncoming vehicle 112 is present in the blind spot formed by the sharply curved road, the glare to the oncoming vehicle 112 having moved out of the blind spot can be suppressed. On the other hand, even when the light distribution pattern is switched to the special low-beam pattern, since the high-beam state is continued on the own vehicle's lane side, forward visibility of the driver is maintained in a state substantially similar to that in the high-beam pattern so that it is possible to make it less likely for the driver to feel as if the view is narrowed.

Next, consideration will be given to a case where the own vehicle 110 is running on the sharply left-curved road B. In this case, the oncoming vehicle 112 approaches toward the own vehicle 110 from the left side. That is, the oncoming vehicle 112 approaches toward the high-beam state side of the special low-beam pattern. However, as shown in FIG. 8, since the illumination area of the high beam is blocked by a slope such as a mountain or the like as the cause of the sharp curve, an effect exerted on the oncoming vehicle 112 is regarded to be small. In addition, even when the oncoming vehicle 112 approaches toward the high-beam state side of the special low-beam pattern, a direction of a sight line of a driver M is different from an optical axis direction N of the lighting unit 210 of the own vehicle 110. Consequently, by the time the direction of the sight line M is directed to the direction of the illumination area, the opposite lane is in the illumination area of the low beam so that the possibility of giving the glare to the driver of the oncoming vehicle 112 is low.

Incidentally, in the case of the above-described vehicle lighting system 100, the situation ahead of the own vehicle 110 is detected on the basis of the image data acquired by the image pickup unit 102. In this case, when the surrounding area is dark such as at night, the detection of the leading vehicle can be easily performed by detecting a light point of a tail lamp and its color (red), and the detection of the oncoming vehicle can be easily performed by detecting a light point of a headlamp and its color (white or yellow). On the other hand, as for a bicycle, the brightness thereof is not established by regulations so that variations in brightness are large and it is therefore difficult to detect the light point thereof. Further, as for a pedestrian, the pedestrian does not have a lighting device for providing the light point so that it is difficult to detect the pedestrian. Consequently, when the driver recognizes the bicycle or the pedestrian, it is preferable to switch the control mode of the vehicle lighting system 100 from the automatic selection mode to the manual selection mode such that the glare is not given to the bicycle or the pedestrian.

When such switching to the manual selection mode is required during running on the sharply curved road, it is preferable for the driver to be able to reflexively perform a mode switching operation at the time of recognition of the bicycle or the pedestrian. Accordingly, the vehicle lighting system 100 of the exemplary embodiment is configured such that the automatic selection mode is enabled only when the high beam is selected using the light switch 306.

FIG. 9 is an explanatory view explaining a relation among a selection switch of the control mode (ADB SW), the light switch 306 (HI/LO SW), and an operation of the vehicle lamp (lamp operation). As shown in FIG. 9, when an ADB SW is OFF, and a HI/LO SW is LO, the low beam is turned on. In addition, when the ADB SW is OFF, and the HI/LO SW is HI, the high beam is turned on. On the other hand, when the ADB SW is ON, and the HI/LO SW is LO, the low beam is turned on. That is, the automatic selection mode is disabled. Further, when the ADB SW is ON, and the HI/LO SW is HI, ADB control is enabled. That is, the automatic selection mode is enabled. In this manner, priority is given to a manual operation of the HI/LO SW over the control in the automatic selection mode.

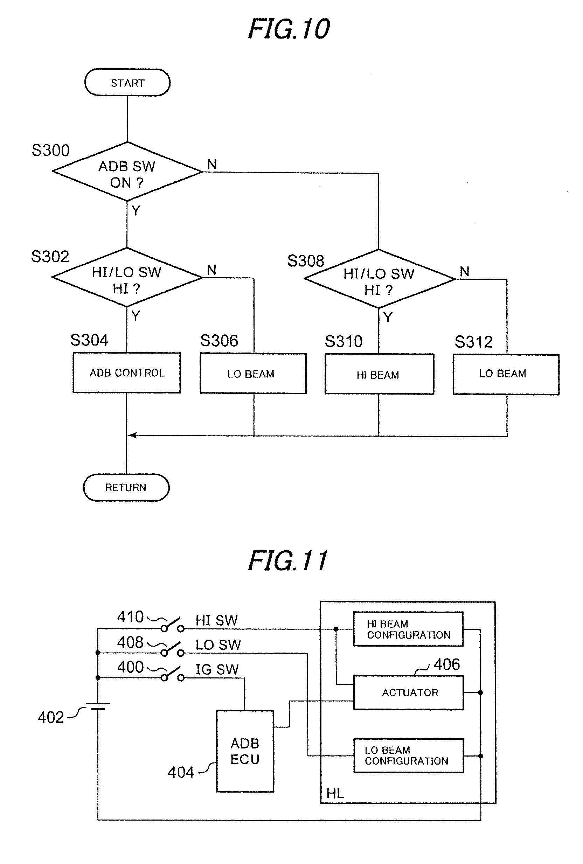

FIG. 10 is a flowchart explaining the preferential operation of the HI/LO SW shown in FIG. 9. When the ADB SW is ON (Y of S300), and the HI/LO SW is HI (Y of S302), the ADB control is executed (S304). That is, the presence and position of the forward vehicle or the like is detected on the basis of the information of the image pickup unit 102 or the like, and the light distribution pattern is automatically selected. In addition, in S302, when the HI/LO SW is LO (N of S302), the low beam is turned on (S306). In S300, when the ADB SW is OFF (N of S300), and the HI/LO SW is HI (Y of S308), the high beam is turned on (S310). Further, in S308, when the HI/LO SW is LO (N of S308), the low beam is turned on (S312).

Consequently, when the automatic selection mode is selected using the ADB SW disposed in the instrument panel or the like, the driver is capable of switching between enable/disable of the automatic selection mode of the control mode of the vehicle lighting system 100 only by switching the HI/LO SW at hand. As a result, the driver is capable of easily performing the mode switching operation by reflexively operating the HI/LO SW at the time of recognition of the bicycle or the pedestrian.

FIG. 11 is an example in which the switching of enable/disable of the automatic selection mode of the control mode using the HI/LO SW explained using FIGS. 9 and 10 is implemented by a circuit configuration. It is to be noted that the circuit configuration of FIG. 11 is applied to the vehicle lamp which forms the low-beam pattern by blocking a part of light when the tabular shade is advanced onto the optical axis, and forms the high-beam pattern when the tabular shade is retreated from the optical axis. The tabular shade of the vehicle lamp is biased to an advanced position by a mechanical mechanism such as a spring or the like to form the low-beam pattern. In addition, when power is supplied to the actuator, the shade is moved to a retreated position against a biasing force of the spring to form the high-beam pattern.

As shown in FIG. 11, when an IG SW (ignition switch) 400 is turned ON, a battery 402 is connected to an ADB ECU 404, and it becomes possible to perform detection of the situation around the vehicle and selection processing of the light distribution pattern suitable for the situation. However, only by turning the IG SW 400 ON, power is not supplied to an actuator 406 for driving the shade so that the actuator 406 does not operate. Subsequently, when a LO SW 408 of the HI/LO SW is turned ON, the battery 402 is connected to a bulb, and the bulb is thereby lit. At this point, power is not supplied to the actuator 406, and hence the shade is biased to the advanced position by the spring to form the low-beam pattern. That is, a LO beam configuration is implemented.

On the other hand, when a HI SW 410 of the HI/LO SW is turned ON, the battery 402 is connected to the bulb, and the bulb is thereby lit. At this point, power is supplied also to the actuator 406 from a circuit including the HI SW 410, and hence the shade is moved to the retreated position against the biasing force of the spring to form the high-beam pattern. That is, a HI beam configuration is implemented. In addition, since the actuator 406 can be driven by a signal from the ADB ECU 404, when it is judged that the switching to the low-beam pattern is required, the actuator 406 is brought into a non-driven state by the control of the ADB ECU 404, and it becomes possible to form the low-beam pattern. That is, the ADB control is allowed.

Thus, by performing electric power supply to the actuator 406 from the circuit including the HI SW 410, it is possible to control enable/disable of the ADB control by the switching between the LO SW 408 and the HI SW 410.

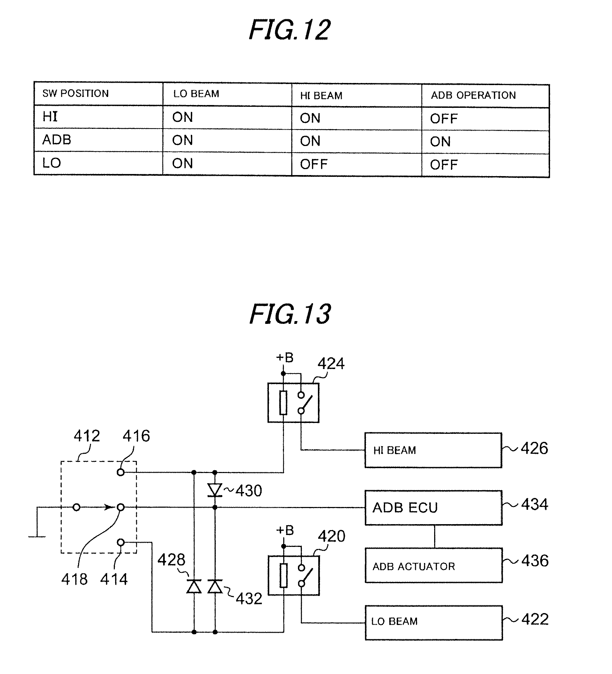

FIG. 12 is an example in which the switching of enable/disable of the automatic selection mode of the control mode is allowed by providing an ADB position for allowing the ADB control between a HI position and a LO position of the HI/LO SW disposed in the steering column. It is to be noted that the example of FIG. 12 shows the example in which the low-beam pattern is formed with turning-on of a LO beam, and the high-beam pattern is formed with turning-on of a HI beam in addition to the LO beam.

As shown in FIG. 12, when the HI position is selected in the HI/LO SW, the LO beam is turned ON, and the HI beam is also turned ON. However, in this case, an ADB operation is turned OFF and disabled. Consequently, in the selection operation of the HI position, only the HI beam is selected. In addition, when the LO position is selected in the HI/LO SW, the LO beam is turned on, but the HI beam is turned OFF. Further, the ADB operation is also turned OFF and disabled. Consequently, in the selection operation of the LO position, only the LO beam is selected.

Subsequently, when the ADB position is selected in the HI/LO SW, the LO beam is turned ON, and the HI beam is also turned ON. In addition, the ADB operation is also turned ON and enabled. That is, it becomes possible to select the formation of the low-beam pattern and the formation of the high-beam pattern using a signal from the ADB ECU.

FIG. 13 shows a circuit configuration for implementing the configuration explained using FIG. 12.

A HI/LO SW 412 has an ADB position 418 between a LO position 414 and a HI position 416. When the LO position 414 is selected, a battery is connected to a ground via a relay 420, a low-beam bulb 422 is lit, and the low-beam pattern is thereby formed. In addition, when the HI position 416 is selected, the battery is connected to the ground via a relay 424, and a high-beam bulb 426 is lit. Further, the relay 420 is also connected to the ground via a diode 428 so that the low-beam bulb 422 is also lit. As a result, the high-beam pattern is formed.

In addition, when the ADB position 418 is selected, the relay 424 is connected to the ground via a diode 430, and the high-beam bulb 426 is lit. Further, the relay 420 is also connected to the ground via a diode 432 so that the low-beam bulb 422 is also lit. Furthermore, an ADB ECU 434 and an ADB actuator 436 also become controllable. Consequently, it becomes possible to perform complete light blocking or partial light blocking of light from the high-beam bulb 426 by the ADB actuator 436, it becomes possible to perform the formation of the low-beam pattern and the special low-beam pattern in addition to the formation of the high-beam pattern, and the ADB control can be thereby performed.

Thus, since it becomes possible to perform enable/disable of the ADB control using the position selection of the HI/LO SW, the driver is able to reflexively perform the mode switching operation at the time of recognition of the bicycle or the pedestrian easily.

It is to be noted that the circuit configuration of each of FIGS. 11 and 13 is one example, and the circuit configuration may be appropriately changed as long as similar operations can be implemented.

[Description of Reference Numerals and Signs]

10 vehicle lamp, 12 rotational shade, 14 bulb, 18 shade mechanism, 26 actuator, 100 vehicle lighting system, 102 image pickup unit, 110 system-mounted vehicle, 112 oncoming vehicle, 114 steering angle sensor, 116 yaw rate sensor, 118 navigation system, 120 external information system reception section, 210 lighting unit, 228 illumination control section, 302 control section

**Claims**

1. A vehicle lighting system (100) comprising:

   a vehicle lamp (10) capable of switching a light distribution pattern between a low-beam pattern and a high-beam pattern; and
   a control section (302) for performing a switching control of the light distribution pattern on a basis of information indicative of a situation ahead of an own vehicle (110),
   wherein the control section (302) is configured to perform the switching control according to a positional information on a forward vehicle (112) in a case where the information indicates a presence of the forward vehicle, and to give priority to switching the light distribution pattern to the low-beam pattern irrespective of presence or absence of the forward vehicle in a case where the information indicates a curved road condition sharper than a reference curved road.

2. The vehicle lighting system according to claim 1, wherein the low-beam pattern includes a special low-beam pattern which brings an opposite lane side into a low-beam state and brings an own vehicle's lane side into a high-beam state, and
the control section (302) is configured to give priority to switching the light distribution pattern to the special low-beam pattern in the case where the information indicates the curved road condition sharper than the reference curved road.

3. The vehicle lighting system according to claim 1 or 2, wherein the control section (302) is configured to set a curved road condition serving as a trigger for switching from the low-beam pattern to the high-beam pattern to be gentler than said reference curved road serving as a trigger for switching from the high-beam pattern to the low-beam pattern.

4. A control apparatus for a vehicle lamp (10) capable of switching a light distribution pattern between a low-beam pattern and a high-beam pattern,
wherein the apparatus is configured to perform a switching control of the light distribution patterns on a basis of information indicative of a situation ahead of an own vehicle (110),
wherein the apparatus is configured to perform the switching control according to a positional information on a forward vehicle (112), in a case where the information indicates a presence of the forward vehicle, and,
wherein the apparatus is configured to gives priority to switching to the low-beam pattern irrespective of presence or absence of the forward vehicle, in a case where the information indicates a curved road condition sharper than a reference curved road.

5. A vehicle lamp (10) which is configured to be capable of switching a light distribution pattern between a low-beam pattern and a high-beam pattern according to a positional information on a forward vehicle (112), and also capable of preferential switching to the low-beam pattern according to information indicative of a curved road condition sharper than a reference curved road.

6. A control method of a vehicle lamp (10) which is capable of switching a light distribution pattern between a low-beam pattern and a high-beam pattern, the method comprising:

switching the light distribution patterns on a basis of information indicative of a situation ahead of an own vehicle (110);
switching the light distribution patterns according to a positional information on a forward vehicle (112), in a case where the information indicates a presence of the forward vehicle; and,
giving priority to switching to the low-beam pattern irrespective of presence or absence of the forward vehicle, in a case where the information indicates a curved road condition sharper than a reference curved road.

## FIG.1

FIG.2

# FIG.3

## FIG.4

# FIG.5

IMAGE PICKUP UNIT 102

DETECTION UNIT 104

STEERING ANGLE SENSOR 114

YAW RATE SENSOR 116

NAVIGATION SYSTEM 118

EXTERNAL INFORMATION SYSTEM RECEPTION SECTION 120

LIGHT SWITCH 306

CONTROL SECTION 302

POWER SUPPLY CIRCUIT 304

100

LIGHTING UNIT (LEFT) 210L

VEHICLE LAMP 10

BULB 14

ROTATIONAL SHADE 12

ACTUATOR 26

LIGHTING UNIT (RIGHT) 210R

VEHICLE LAMP 10

BULB 14

ROTATIONAL SHADE 12

ACTUATOR 26

# FIG.6

```
                    ┌─────────────┐
                    │    START    │
                    └─────────────┘
                           │
S100            ┌──────────┴──────────┐
              ║ │   SHARP CURVE       │ ║
              ║ │   JUDGMENT          │ ║
                └─────────────────────┘
                           │
S102                      ╱ ╲
                        ╱     ╲            Y
                      ╱ SHARP   ╲ ───────────────┐
                      ╲ CURVE?  ╱                │
                        ╲     ╱                  │
                          ╲ ╱                    │
                           │ N                   │
S104        ┌──────────────┴───┐   S106  ┌───────┴──────────┐
            │  NORMAL CONTROL  │         │   SHARP CURVE    │
            │                  │         │   CONTROL        │
            └──────────────────┘         └───────┬──────────┘
                           │                     │
                           │◄────────────────────┘
                           │
                    ┌─────────────┐
                    │   RETURN    │
                    └─────────────┘
```

## FIG.7

START

S100 → SHARP CURVE JUDGMENT

S102 → SHARP CURVE?  — Y → S106 SHARP CURVE CONTROL

N

S104 → NORMAL CONTROL

RETURN

EP 2 394 851 A2

# FIG.8

# FIG.9

| ADB SW | HI/LO SW | LAMP OPERATION |
|--------|----------|----------------|
| OFF    | LO       | LO BEAM        |
| OFF    | HI       | HI BEAM        |
| ON     | LO       | LO BEAM        |
| ON     | HI       | ADB            |

## FIG.10

```
                    ┌─────────┐
                    │  START  │
                    └─────────┘
                         │
                         │
S300              ◇─────────────◇   N
            ◇   ADB SW   ◇────────────────────────────┐
            ◇    ON ?    ◇                             │
                  ◇   ◇                                │
                    │ Y                                │
                    │                                  │
S302          ◇─────────────◇   N          S308   ◇─────────────◇   N
         ◇  HI/LO SW  ◇──────────┐      ◇  HI/LO SW  ◇──────────┐
         ◇    HI ?    ◇          │      ◇    HI ?    ◇          │
               ◇   ◇             │            ◇   ◇             │
                 │ Y             │              │ Y             │
                 │               │              │               │
S304   ┌─────────────┐  S306 ┌──────────┐ S310 ┌──────────┐ S312 ┌──────────┐
       │ ADB CONTROL │       │ LO BEAM  │      │ HI BEAM  │      │ LO BEAM  │
       └─────────────┘       └──────────┘      └──────────┘      └──────────┘
              │                   │                 │                 │
              │◄──────────────────┴─────────────────┴─────────────────┘
              │
        ┌─────────┐
        │ RETURN  │
        └─────────┘
```

## FIG.11

```
   410 ─╲╱╸  HI SW            ┌──────────────────────────────────┐
   408 ─╲╱╸  LO SW            │   ┌──────────────────┐           │
   400 ─╲╱╸  IG SW            │   │ HI BEAM          │           │
                              │   │ CONFIGURATION    │           │
402 ─┤├                       │   └──────────────────┘   ⌒406    │
                              │   ┌──────────────────┐           │
                  ┌────────┐  │   │    ACTUATOR      │           │
                  │  ADB   │  │   └──────────────────┘           │
           404 ─  │  ECU   │  │   ┌──────────────────┐           │
                  └────────┘  │   │ LO BEAM          │           │
                              │   │ CONFIGURATION    │           │
                              │ HL└──────────────────┘           │
                              └──────────────────────────────────┘
```

# FIG.12

| SW POSITION | LO BEAM | HI BEAM | ADB OPERATION |
|---|---|---|---|
| HI | ON | ON | OFF |
| ADB | ON | ON | ON |
| LO | ON | OFF | OFF |

# FIG.13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2085264 A2
- JP 2009227088 A
- EP 2135774 A2